# EUROPEAN PATENT SPECIFICATION

(11) **EP 2 717 440 B1**
(45) Date of publication and mention of the grant of the patent: **08.08.2018**
(21) Application number: 13184399.7
(22) Date of filing: 13.09.2013
(51) Int. Cl.: H02K 11/00, H02K 3/18, H02K 11/33, H02K 1/14, H02K 3/52

(54) **Rotary electric motor salient pole armature winding**
Ankerwicklung einer elektrischen Drehmaschine
Enroulement d'armature pour machine électrique tournante à pôles saillants

(30) Priority: 04.10.2012 JP 2012222397
(43) Date of publication of application: 09.04.2014
(73) Proprietor: Mitsubishi Electric Corporation, Chiyoda-ku Tokyo 100-8310 (JP)
(72) Inventor: Ono, Junichi, Chiyoda-ku, Tokyo 100-8310 (JP); Kato, Takeharu, Chiyoda-ku, Tokyo 100-8310 (JP)
(74) Representative: Moore, Graeme Patrick

(56) References cited:
- WO-A1-2005/114817
- WO-A1-2012/029706
- JP-A- H 033 625
- JP-A- H1 132 457
- JP-A- H09 308 142
- JP-A- 2002 369 429
- JP-A- 2008 160 939

## Description

### [Technical Field]

The present invention relates to a motor stator and a motor, and more specifically, to a coil shape thereof.

### [Background Art]

Generally, in a motor stator, it is desirable to increase the space factor of winding slots that accommodate coils so as to achieve low loss and size reduction. From such a standpoint, there are related-art technologies that prevent interference between coils by varying the shapes of adjoining coils, while increasing the space factor of the winding slots by increasing the number of wire turns at specific locations so that formation of gaps is prevented as much as possible (see Patent Literatures 1 to 8).

### [Citation List]

### [Patent Literature]

[Patent Literature 1] Japanese Unexamined Patent Application Publication No. 2005-117821 (e.g., see [0009] and [0010], and Fig. 1)[Patent Literature 2] Japanese Unexamined Patent Application Publication No. 03-3625 (e.g., see pages 2 and 3, and Figs. 1 to 5)[Patent Literature 3] Japanese Unexamined Patent Application Publication No. 10-174331 (e.g., see [0030] to [0032], and Fig. 1)[Patent Literature 4] Japanese Unexamined Patent Application Publication No. 11-032457 (e.g., see [0014] to [0018], and Figs. 1 and 2)[Patent Literature 5] Japanese Unexamined Patent Application Publication No. 10-174331 (e.g., see [0015] to [0023], and Fig. 1)[Patent Literature 6] Japanese Unexamined Patent Application Publication No. 04-150749 (e.g., see page 3 and Fig. 1)
[Patent Literature 7] WO2007/141830 (e.g., see [0010] to [0014], and Figs. 1 and 2)
[Patent Literature 8] JP H09 308142 A (e.g. Figs. 1-4 and 6)

### [Summary of Invention]

### [Technical Problem]

Although the coils have shapes that prevent adjoining coils from interfering with each other in the technologies discussed in Patent Literatures 1 to 7, interference between the coils and an IC mounted on a substrate attached on the stator is not taken into consideration. Therefore, when a single wound coil has a large number of wire turns at a specific location thereof, as described above, the coil increases in size at that location not only in the circumferential direction of the stator, but also toward the substrate on the stator. As a result, in a case where the coil is formed of a wire with a large wire diameter and has a large number of wire turns, there is no gap between the coil and the substrate, which is a problem in that the coil interferes with the IC mounted on the substrate.

The present invention has been made to solve the aforementioned problem, and an object thereof is to provide a motor stator and a motor having a coil shape that can ensure the space factor of winding slots while preventing interference between an IC mounted on a substrate attached on the stator and coils wound around the stator.

### [Solution to Problem]

A first aspect of the present invention provides a motor stator according to claim 1.

### [Advantageous Effects of Invention]

With the motor stator according to the present invention, the space factor of winding slots can be ensured while interference between the IC mounted on the substrate attached on the stator and the coils wound around the stator can be prevented.

### [Brief Description of Drawings]

[Fig. 1] Fig. 1 is a perspective view illustrating a stator in which a stator core of a motor according to Embodiment of the present invention is positively bent after wires are wound therearound.
[Fig. 2] Fig. 2 is a perspective view illustrating the stator in which the wires are wound around the stator core of the motor according to Embodiment of the present invention after the stator core is reversely bent.
[Fig. 3] Fig. 3 is a perspective view of a strip-shaped stator core of the motor according to Embodiment of the present invention.
[Fig. 4] Fig. 4 is a cross-sectional view of a 12-slot/8-pole synchronous motor (brushless DC motor) equipped with the motor stator according to Embodiment of the present invention.
[Fig. 5] Fig. 5 is a connection diagram of stator coils in the motor according to Embodiment of the present invention.
[Fig. 6] Fig. 6 illustrates the reversely-bent stator core of the motor according to Embodiment of the present invention before wires are wound therearound.
[Fig. 7] Fig. 7 illustrates a winding device that winds wires around the stator core of the motor according to Embodiment of the present invention.
[Fig. 8] Fig. 8 is a schematic diagram illustrating the shape of a coil wound around the stator core of the motor according to Embodiment of the present invention, as viewed from a side surface of the stator.
[Fig. 9] Fig. 9 is a side view illustrating a state where a substrate is attached to the motor stator according to Embodiment of the present invention after the motor stator is positively bent.
[Fig. 10] Fig. 10 is a cross-sectional view illustrating interference between adjoining coils of the motor stator according to Embodiment of the present invention.
[Fig. 11] Fig. 11 is a cross-sectional view illustrating coil shapes and a coil arrangement that eliminate interference between adjoining coils of the motor stator according to Embodiment of the present invention.

### [Description of Embodiment]

Embodiment of the present invention will be described below with reference to the drawings.

### Embodiment

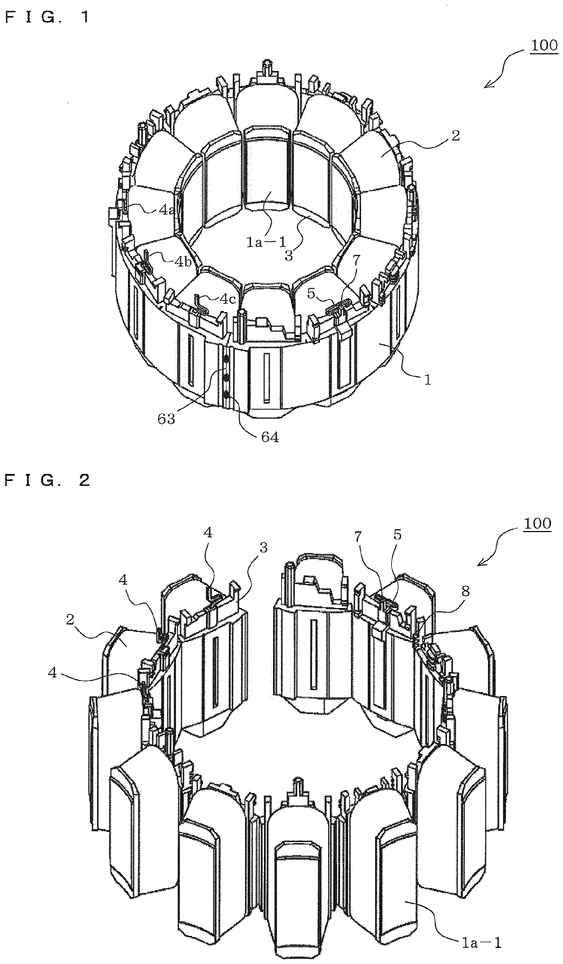

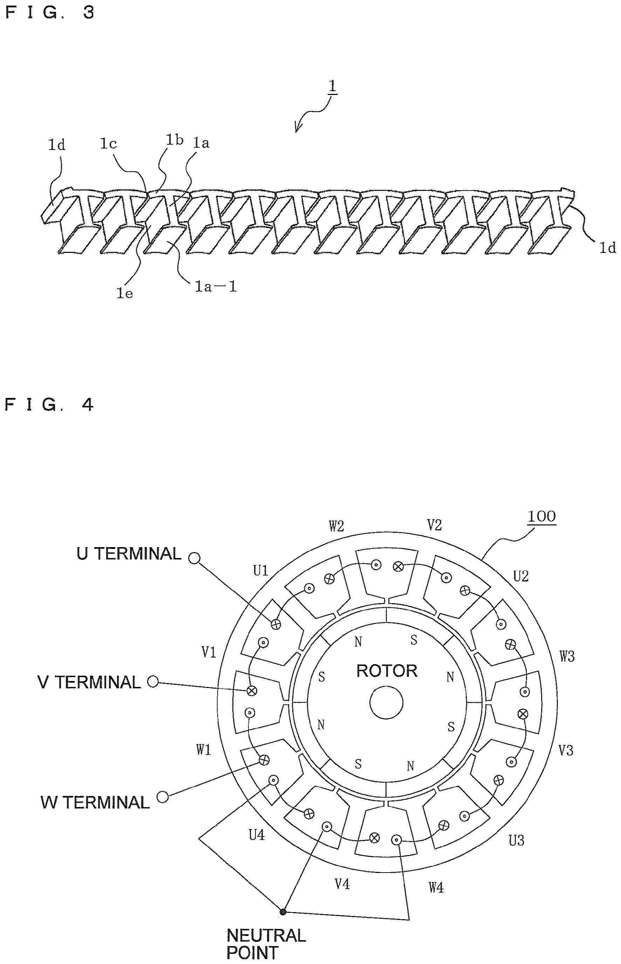

Fig. 1 is a perspective view illustrating a stator in which a stator core of a motor according to Embodiment of the present invention is positively bent after wires are wound therearound. Fig. 2 is a perspective view illustrating the stator in which the wires are wound around the stator core of the motor according to Embodiment of the present invention after the stator core is reversely bent. Fig. 3 is a perspective view of a strip-shaped stator core of the motor according to Embodiment of the present invention. The term "positively bent" refers to a state where a stator 100 is bent such that teeth 1a are located at the inner side, whereas the term "reversely bent" refers to a state where the stator 100 is bent such that the teeth 1a are located at the outer side.

The motor stator 100 according to Embodiment is combined with a rotor that uses a permanent magnet, thereby constituting a synchronous motor (brushless DC motor).

The stator 100 is of a type in which coils 2 are wound around a stator core 1, and is formed into a ring shape, as shown in Fig. 1, by bending thin-walled connection sections 1c of the stator core 1 and fixing and welding stator-core abutment sections 63 to each other at welded sections 64. The teeth 1a extend in a radially inward direction from core backs 1b. A terminal end 1a-1 extends in the circumferential direction from opposite sides of an end of each tooth 1a. Winding slots 1e are formed in areas surrounded by the core backs 1b, the teeth 1a, and the terminal ends 1a-1. Insulating sections 3 are integrally formed so as to cover the inner surfaces of the winding slots 1e, and the coils 2 are wound around the teeth 1a via these insulating sections 3, thereby forming the stator 100.

In Embodiment, a 12-slot/8-electrode motor stator 100 will be described. The motor stator 100 has the following characteristic features. Reference numerals will be described later.
(1) The stator core 1 has twelve slots (i.e., the stator core 1 has twelve teeth 1a).
(2) The coils 2 constitute a three-phase single Y connection and have eight poles. The coils 2 are of a concentrated winding type in which they are wound around the twelve respective teeth 1a.
(3) The stator core 1 is formed by punching an electromagnetic steel sheet having a thickness of about 0.1 mm to 0.7 mm into strips and then laminating these strips by, for example, caulking, welding, or bonding. The strip-shaped stator core 1 has twelve teeth 1a.
(4) The strip-shaped stator core 1 is provided with the insulating sections 3 serving as insulators between the coils 2 and the stator core 1. The insulating sections 3 are formed integrally with the stator core 1 by using, for example, thermoplastic resin, such as PBT (polybutylene terephthalate). The insulating sections 3 are provided for the respective teeth 1a. Therefore, twelve insulating sections 3 are provided.
(5) After providing the strip-shaped stator core 1 with the insulating sections 3, three power-supply terminals 4 and one neutral point terminal 5 are inserted to predetermined locations at first axial ends (i.e., connection side) of the insulating sections 3.
(6) The strip-shaped stator core 1 is bent in a direction opposite to that of the completed motor stator 100 so as to expand the openings between the teeth 1a. This allows for easier winding of the coils 2 around the teeth 1a.
(7) After the winding process, the stator core 1 is positively bent (i.e., bent in a predetermined direction so as to be formed substantially into a donut shape) so that the teeth 1a are located at the inner side.
(8) The stator-core abutment sections 63 of the stator core 1 are welded and fixed to each other at the welded sections 64.
(9) The power-supply terminals 4 and the neutral point terminal 5 are fused.
(10) Furthermore, a connection component (not shown) to be externally connected is attached to the motor stator 100 so as to become mechanically and electrically connected thereto.

As shown in Fig. 2, the thin-walled connection sections 1c are bent so that the teeth 1a of the stator core 1 are located at the outer side, whereby the spaces in the winding slots 1e surrounded by the core backs 1b, the teeth 1a, and the terminal ends 1a-1 are expanded. In this state, the coils 2 are wound around the teeth 1a.

The three power-supply terminals 4 (i.e., a U terminal 4a, a V terminal 4b, and a W terminal 4c) and the single neutral point terminal 5 are inserted to the respective locations, as shown in Fig. 2, at the first ends (i.e., upper side in the axial direction) of the insulating sections 3 integrated with the stator core 1, and are fused. The term "fused" refers to a state where coatings of the coils 2 are melted by heating, and the melted ends and the power-supply terminals 4, and the melted ends and the neutral point terminal 5 are mechanically and electrically connected by caulking.

The first end (i.e., upper side in the axial direction) of the insulating section 3 to which the neutral point terminal 5 is inserted is provided with a routing protrusion 7 for the neutral point terminal 5.

Furthermore, the first ends (i.e., upper side in the axial direction) of the insulating sections 3 are provided with protrusions 8 that hold connecting wires of the respective phases at a predetermined height position from an axial-end surface of the stator core 1.

Due to having twelve slots, the motor stator 100 according to Embodiment has twelve teeth 1a.

The stator core 1 is formed by punching an electromagnetic steel sheet having a thickness of about 0.1 mm to 0.7 mm into strips and then laminating these strips by, for example, caulking, welding, or bonding.

As shown in Fig. 3, the stator core 1 is constituted of the teeth 1a, the terminal ends 1a-1, the core backs 1b, the thin-walled connection sections 1c, core end surfaces 1d, and the winding slots 1e.

Each tooth 1a extends in the radially inward direction from the corresponding core back 1b, such that the core back 1b and the tooth 1a substantially form a T-shape in plan view. The end of each tooth 1a has a terminal end 1a-1, which is substantially rectangular in front view. A total of twelve adjoining core backs 1b are connected via the thin-walled connection sections 1c. Therefore, the stator core 1 can be reversely bent and positively bent in a flexible manner.

With regard to the core backs 1b located at the opposite ends, the end surfaces thereof that do not adjoin other core backs 1b are provided with the core end surfaces 1d.

The winding slots 1e are formed in areas surrounded by the core backs 1b, the teeth 1a, and the terminal ends 1a-1. When the core end surfaces 1d at the opposite ends are connected to each other, twelve winding slots 1e are formed. The insulating sections 3 are formed so as to cover the inner surfaces of the winding slots 1e. In this case, because a gap with a size of 1 mm or smaller in the radial direction is required between a rotor (not shown) and the motor stator 100, the terminal ends 1a-1 are not provided with the insulating sections 3.

Fig. 4 is a cross-sectional view of a 12-slot/8-pole synchronous motor (brushless DC motor) equipped with the motor stator according to Embodiment of the present invention.

As shown in Fig. 4, the synchronous motor (brushless DC motor) according to Embodiment is of a 12-slot/8-pole type in which the ratio of the number of teeth 1a to the number of magnetic poles of the rotor is 3:2.

The coils in this stator 100 are arranged in the following order: a U-phase coil, a V-phase coil, and a W-phase coil. By applying alternating currents phase-shifted by 120 degrees from each other to the coils, the synchronous motor (brushless DC motor) is driven.

The U-phase coil is constituted of a coil U1, a coil U2, a coil U3, and a coil U4. A winding-start end of the coil U1 is connected to a U terminal 4a, which is one of the power-supply terminals 4. A winding-finish end of the coil U4 is connected to the neutral point terminal 5.

The V-phase coil is constituted of a coil V1, a coil V2, a coil V3, and a coil V4. A winding-start end of the coil V1 is connected to a V terminal 4b, which is one of the power-supply terminals 4. A winding-finish end of the coil V4 is connected to the neutral point terminal 5. As shown in Fig. 1, the V terminal 4b is provided at the first end (i.e., upper side in the axial direction) of the insulating section 3 formed on the core back 1b located next to the core back 1b that is provided with the U terminal 4a.

The W-phase coil is constituted of a coil W1, a coil W2, a coil W3, and a coil W4. A winding-start end of the coil W1 is connected to a W terminal 4c, which is one of the power-supply terminals 4. A winding-finish end of the coil W4 is connected to the neutral point terminal 5. As shown in Fig. 1, the W terminal 4c is provided at the first end (i.e., upper side in the axial direction) of the insulating section 3 formed on the core back 1b located next to the core back 1b that is provided with the V terminal 4b.

The coils 2 are all wound around the teeth 1a in the same direction.

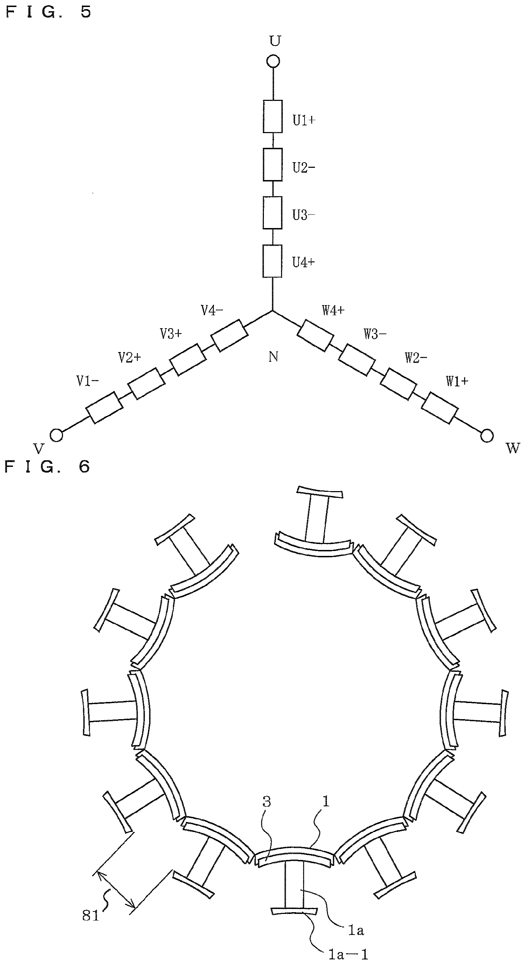

Fig. 5 is a connection diagram of the stator coils in the motor according to Embodiment of the present invention.

As shown in Fig. 5, the stator coils in the motor stator 100 are connected in a single Y pattern. Specifically, the coil U1 (+), the coil U2 (-), the coil U3 (-), and the coil U4 (+) of the U phase are connected in series. The coil V1 (-), the coil V2 (+), the coil V3 (+), and the coil V4 (-) of the V phase are connected in series. Furthermore, the coil W1 (+), the coil W2 (-), the coil W3 (-), and the coil W4 (+) of the W phase are connected in series. The winding-finish ends of the coil U4 (+), the coil V4 (-), and the coil W4 (+) are connected to a neutral point N.

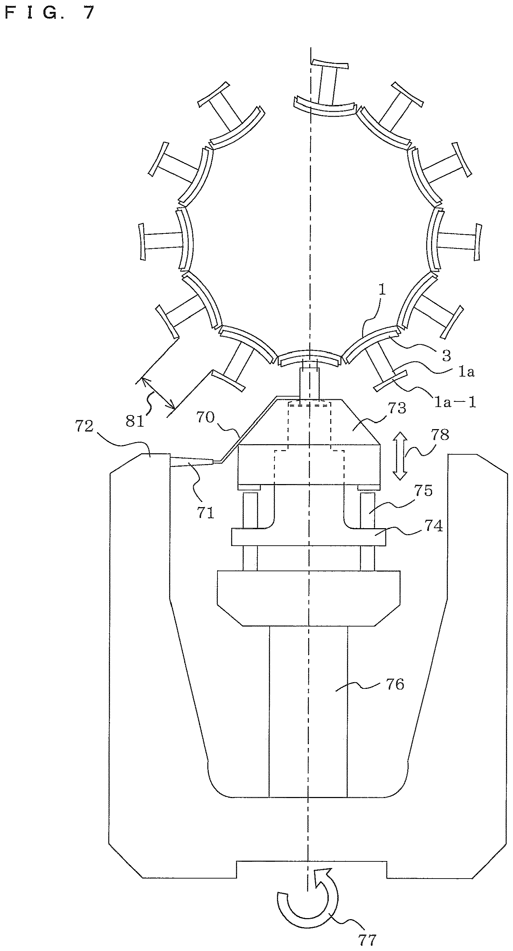

Fig. 6 illustrates the reversely-bent stator core of the motor according to Embodiment of the present invention before wires are wound therearound. Fig. 7 illustrates a winding device that winds wires around the stator core of the motor according to Embodiment of the present invention.

The winding of wires around the stator core 1 of the motor is performed by the winding device. In Fig. 7, the winding device includes a nozzle 71, a flier 72, a former 73, a guide 74, a shaft 76, and columns 75.

The nozzle 71 is attached to the flier 72. The nozzle 71 has a hollow cylindrical shape and feeds a wire 70. The flier 72 can be driven in a rotating direction 77. The former 73 is provided on the columns 75 arranged around the rotation axis of the flier 72. The former 73 can be moved in a feeding direction (i.e., along the rotation axis) 78 of the flier 72 by the guide 74 and the shaft 76. The former 73 performs a winding-position positioning process by pressing the wire 70 in the feeding direction 78.

Next, a winding process performed on the stator core 1 of the motor will be described.

The winding process of the wire 70 involves guiding the wire 70 supplied from the flier 72 rotating around the axis of the teeth 1a by using the former 73 moving in the feeding direction 78.

The former 73 presses the wire 70 in the feeding direction 78, that is, toward the connecting-wire side of the stator core 1, so as to perform the winding-position positioning process.

Then, the flier 72 rotates so that the wire 70 fed from the nozzle 71 is wound around each tooth 1a via the corresponding insulating section 3.

In this case, a distance 81 between the terminal ends 1a-1 of adjoining teeth 1a is smaller than the width of the flier 72 so that, when the flier 72 moves in the feeding direction 78, the flier 72 cannot reach the deep end of the tooth 1a. Therefore, the flier 72 is provided with the former 73 having a size that allows it to penetrate through the distance 81 between the terminal ends 1a-1 of adjoining teeth 1a. With the former 73 entering the deep end of the tooth 1a in place of the flier 72, the wire 70 supplied from the nozzle 71 can reach the deep end of the tooth 1a along the side surface of the former 73, whereby the wire 70 can be wound to the deep end of the tooth 1a.

When the flier 72 moves in the feeding direction 78, the relative positional relationship between the flier 72 and the former 73 does not change. Furthermore, during the winding process, the flier 72 rotates, whereas the former 73 does not rotate.

Accordingly, by repeating the movement of the flier 72 in the rotating direction 77 and the movement of the flier 72 and the former 73 in the feeding direction 78, coils 2 wound around the teeth 1a can be obtained.

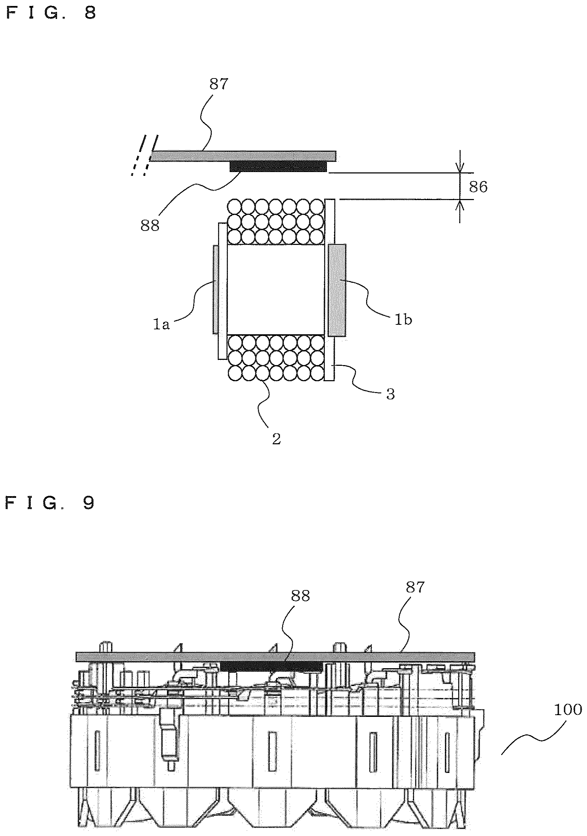

Fig. 8 is a schematic diagram illustrating the shape of a coil wound around the stator core of the motor according to Embodiment of the present invention, as viewed from a side surface of the stator. Fig. 9 is a side view illustrating a state where a substrate is attached to the motor stator according to Embodiment of the present invention after the motor stator is positively bent.

After performing the winding process on the motor stator by using the winding device, the stator 100 is positively bent, and a substrate 87 is attached thereto from the upper side in the axial direction, as shown in Fig. 9. In this case, the winding process is performed such that a gap 86 is formed between an IC 88 mounted on the stator 100 side of the substrate 87 and the coils 2 wound around the teeth 1a of the stator 100, as shown in Fig. 8, thus preventing the IC 88 and the coils 2 from interfering with each other.

However, in order to ensure the space factor of the winding slots 1e, the interference is eliminated without reducing the number of wire turns of each coil 2 by shifting the wire 70 wound around an area that interferes with the IC 88 toward an area with an extra space.

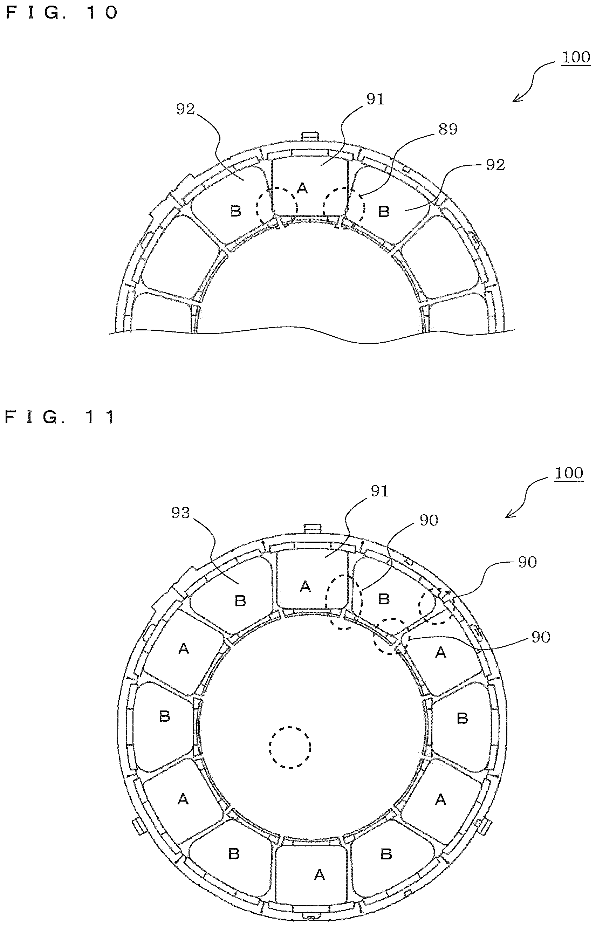

Coils A 91 shown in Fig. 10 to be described below, each of which has a substantially rectangular shape in cross section, are formed as the result of the above-described winding process. By placing the IC 88 above the coils A 91, interference therebetween can be prevented.

Fig. 10 is a cross-sectional view illustrating interference between adjoining coils of the motor stator according to Embodiment of the present invention. Fig. 11 is a cross-sectional view illustrating coil shapes and a coil arrangement that eliminate interference between adjoining coils of the motor stator according to Embodiment of the present invention.

As shown in Fig. 10, the coils A 91 having a substantially rectangular shape in cross section and coils B 92 having a substantially trapezoidal shape in cross section are alternately arranged in the circumferential direction.

The coils A 91 having the substantially rectangular shape in cross section does not interfere with the IC 88, as described above, but interferes with the neighboring coils B 92 having the substantially trapezoidal shape in cross section at interference areas 89 where the number of wire turns of the coils 2 is increased, as shown in Fig. 10. By shifting the wires 70 of the coils B 92, having the substantially trapezoidal shape in cross section, wound in the interference areas 89, which are located at the inner peripheral side, toward the outer peripheral side where there is extra space, interference is eliminated.

In this case, the coils B 92 with the substantially trapezoidal shape in cross section are coils B 93 having a substantially trapezoidal shape in cross section, as shown in Fig. 11. With regard to the shape of each coil B 93, the outer peripheral side thereof is longer than the inner peripheral side thereof, as compared with the shape of the coils B 92 having the substantially trapezoidal shape in cross section.

Accordingly, as shown in Fig. 11, the adjoining sides of the coils A 91 that are substantially rectangular in cross section and the coils B 93 that are substantially trapezoidal in cross section become substantially parallel to each other, whereby interference between the coils A 91 that are substantially rectangular in cross section and the coils B 93 that are substantially trapezoidal in cross section can be eliminated, as indicated by interference-eliminated areas 90.

In this case, in cross section of each coil 2 wound around the corresponding tooth 1a, each of the aforementioned sides is not exactly a straight line since the side refers to a line that connects outermost wound sections.

Furthermore, since the number of wire turns at the outer peripheral side of each coil B 93 having the substantially trapezoidal shape in cross section is increased relative to the reduced number of wire turns at the inner peripheral side thereof, the space factor of the winding slots 1e is not only ensured but also increased.

Accordingly, a motor stator having a coil shape that can ensure the space factor of the winding slots 1e while preventing interference between the IC mounted on the substrate 87 attached on the stator and the coils wound around the stator can be obtained.

Although the above description of Embodiment is directed to a 12-slot/8-electrode motor stator 100, a different number of slots and a different number of poles are also permissible.

### [Reference Signs List]

1: stator core 1a: tooth 1a-1: terminal end 1b: core back 1c: thin-walled connection section 1d: core end surface 1e: winding slot 2: coil 3: insulating section 4: power-supply terminal 4a: U terminal 4b: V terminal 4c: W terminal 5: neutral point terminal 7: routing protrusion 8: protrusion 63: stator-core abutment section 64: welded section 70: wire 71: nozzle 72: flier 73: former 74: guide 75: column 76: shaft 77: rotating direction 78: feeding direction 81: distance between terminal ends of adjoining teeth 86: gap 87: substrate 88: IC 89: interference area 90: interference-eliminated area 91: coil A with substantially rectangular shape in cross section 92: coil B with substantially trapezoidal shape in cross section 93: coil B with substantially trapezoidal shape in cross section and not interfering with coil A 100: stator

## Claims

1. A motor stator (100) comprising:
a stator core (1) having a plurality of teeth (1a);
coils (2) wound around the respective teeth (1a); and
a substrate (87) that is equipped with an IC (88) for driving a motor and that is attached to the stator core in an axial direction, such that a gap (86) is formed between the IC (88) and the coils (2), the IC (88) being mounted on the stator core side of the substrate,
wherein the coils (2) include coils (91) formed into a substantially rectangular shape in cross section and coils (93) formed into a substantially trapezoidal shape in cross section,
wherein, in a state where the stator core (1) is formed into a ring shape such that the teeth (1a) are located at an inner side, the coils (91) formed into the substantially rectangular shape in cross section and the coils (93) formed into the substantially trapezoidal shape in cross section are alternately arranged in a circumferential direction,
the outer peripheral side of each coil formed into the substantially trapezoidal shape in cross section is longer than the respective inner peripheral side, and
the IC (88) is positioned axially facing one of the coils (91) formed into the substantially rectangular shape in cross section when the substrate (87) is attached.

2. The motor stator (100) of claim 1, wherein the adjoining sides of the coils (91) formed into the substantially rectangular shape in cross section and the coils (93) formed into the substantially trapezoidal shape in cross section are substantially parallel to each other.

3. A motor comprising: the motor stator (100) of claim 1 or 2.

## Patentansprüche

1. Motorstator (100), umfassend:
einen Statorkern (1), der eine Vielzahl von Zähnen (1a) aufweist;
Spulen (2), die um die jeweiligen Zähne (1a) herumgewickelt sind; und
ein Substrat (87), das mit einer integrierten Schaltung (88) zum Ansteuern eines Motors ausgestattet ist und das am Statorkern in eine axiale Richtung angebracht ist, sodass ein Spalt (86) zwischen der integrierten Schaltung (88) und den Spulen ausgebildet ist, wobei die integrierte Schaltung (88) auf der Statorkernseite des Substrats befestigt ist,
wobei die Spulen (2) Spulen (91), die im Querschnitt im Wesentlichen rechteckig ausgebildet sind, und Spulen (93), die im Querschnitt im Wesentlichen trapezförmig ausgebildet sind, umfassen,
wobei in einem Zustand, in dem der Statorkern (1) ringförmig ausgebildet ist, sodass die Zähne (1a) an einer Innenseite positioniert sind, die Spulen (91), die im Querschnitt im Wesentlichen rechteckig ausgebildet sind, und die Spulen (93), die im Querschnitt im Wesentlichen trapezförmig ausgebildet sind, in eine Umfangsrichtung abwechselnd angeordnet sind,
wobei die Außenumfangsseite von jeder im Querschnitt im Wesentlichen trapezförmig ausgebildeten Spule länger als die jeweilige Innenumfangsseite ist, und wobei die integrierte Schaltung (88) axial einer der im Querschnitt im Wesentlichen rechteckig ausgebildeten Spulen (91) gegenüberliegend positioniert ist, wenn das Substrat (87) angebracht ist.

2. Motorstator (100) nach Anspruch 1, wobei die angrenzenden Seiten der im Querschnitt im Wesentlichen rechteckig ausgebildeten Spulen (91) und der im Querschnitt im Wesentlichen trapezförmig ausgebildeten Spulen (93) im Wesentlichen zueinander parallel sind.

3. Motor, umfassend den Motorstator (100) nach Anspruch 1 oder 2.

## Revendications

1. Stator de moteur (100) comprenant :
un noyau de stator (1) ayant une pluralité de dents (1a) ;
des bobines (2) enroulées autour des dents respectives (1a) ; et
un substrat (87) qui est équipé d'un CI (88) pour entraîner un moteur et qui est attaché au noyau de stator dans une direction axiale, de sorte qu'un espace (86) est formé entre le CI (88) et les bobines (2), le CI (88) étant monté sur le côté de noyau de stator du substrat,
dans lequel les bobines (2) comprennent des bobines (91) formées dans une forme sensiblement rectangulaire en section transversale, et des bobines (93) formées dans une forme sensiblement trapézoïdale en section transversale,
dans lequel, dans un état où le noyau de stator (1) est formé en une forme d'anneau de telle sorte que les dents (1a) sont situées au niveau d'un côté interne, les bobines (91) formées dans une forme sensiblement rectangulaire en section transversale et les bobines (93) formées dans une forme sensiblement trapézoïdale en section transversale sont agencées alternativement dans une direction circonférentielle,
le côté périphérique externe de chaque bobine formée dans une forme sensiblement trapézoïdale en section transversale est plus long que le côté périphérique interne respectif, et
le CI (88) est positionné axialement en regard d'une des bobines (91) formées dans une forme sensiblement rectangulaire en section transversale lorsque le substrat (87) est fixé.

2. Stator de moteur (100) selon la revendication 1, dans lequel les côtés adjacents des bobines (91) formées dans une forme sensiblement rectangulaire en section transversale et des bobines (93) formées dans une forme sensiblement trapézoïdale en section transversale sont sensiblement parallèles les uns aux autres.

3. Moteur comprenant : le stator de moteur (100) selon la revendication 1 ou 2.
